# EUROPÄISCHE PATENTSCHRIFT

(11) **EP 3 578 395 B1**
(45) Veröffentlichungstag und Bekanntmachung des Hinweises auf die Patenterteilung: **25.08.2021**
(21) Anmeldenummer: 19172156.2
(22) Anmeldetag: 02.05.2019
(51) Int. Cl.: B60C 23/04, G06K 19/077, H01Q 9/27, H01Q 1/22

(54) **ELEKTROMAGNETISCHE SENDE- UND EMPFANGSVORRICHTUNG**
ELECTROMAGNETIC TRANSMITTER AND RECEIVING DEVICE
DISPOSITIF D'ÉMISSION ET DE RÉCEPTION ÉLECTROMAGNÉTIQUE

(30) Priorität: 08.06.2018 DE 102018209154
(43) Veröffentlichungstag der Anmeldung: 11.12.2019
(73) Patentinhaber: Continental Reifen Deutschland GmbH, 30165 Hannover (DE)
(72) Erfinder: Kurz, Martin, 30165 Hannover (DE); Nawrocka-Herczynska, Monika, 30165 Hannover (DE); Ehmke, Tobias, 30165 Hannover (DE); Finger, Sebastian, 30165 Hannover (DE)
(74) Vertreter: Continental Corporation

(56) Entgegenhaltungen:
- EP-A1- 1 354 729
- EP-A2- 1 870 262
- WO-A1-2016/193457
- DE-A1-102007 043 077
- DE-A1-102018 114 616
- JP-A- 2002 211 222
- US-A1- 2004 159 383

## Beschreibung

Die Erfindung bezieht sich auf eine elektromagnetische Sende- und Empfangsvorrichtung für einen Reifen sowie auf einen Reifen.

Die Erfindung geht aus von einer elektromagnetischen Sende- und Empfangsvorrichtung für einen Reifen, aufweisend mindestens eine Speicherkomponente, wobei die mindestens eine Speicherkomponente zur Speicherung einer Reifeninformation vorgesehen ist. Die elektromagnetische Sende- und Empfangsvorrichtung weist eine Tragekomponente auf, wobei die Tragekomponente zum Tragen der mindestens einen Speicherkomponente vorgesehen ist. Die elektromagnetische Sende- und Empfangsvorrichtung weist mindestens eine Primärantenne und mindestens eine Sekundärantenne auf. Die mindestens eine Primärantenne ist zum Senden und zum Empfangen elektromagnetischer Wellen vorgesehen und die mindestens eine Sekundärantenne ist zum Senden und zum Empfangen elektromagnetischer Wellen vorgesehen.

Das Tragen durch die Tragekomponente bedeutet insbesondere, dass die mindestens eine Speicherkomponente auf der oder an der oder innerhalb der Tragekomponente angeordnet werden kann, wobei die Tragekomponente die mindestens eine Speicherkomponente stützt und sichert.

Die mindestens eine Primärantenne ist zum Senden und zum Empfangen elektromagnetischer Wellen vorgesehen und die mindestens eine Sekundärantenne ist zum Senden und zum Empfangen elektromagnetischer Wellen vorgesehen.

Die mindestens eine Primärantenne ist derart mit der mindestens einen Speicherkomponente verbunden, dass eine elektrische Verbindung zwischen der mindestens einen Speicherkomponente und der mindestens einen Primärantenne besteht. Mittels der mindestens einen Primärantenne können Informationen, die in der mindestens einen Speicherkomponente gespeichert sind, mittels elektromagnetischer Wellen durch die mindestens eine Primärantenne versendet werden.

Die mindestens eine Sendekomponente und die mindestens eine Primärantenne können auch über eine Funkverbindung miteinander verbunden sein.

Die mindestens eine Sende- und Empfangsvorrichtung ist zum Speichern von Informationen über einen Reifen geeignet. Ferner ist die elektromagnetische Sende- und Empfangsvorrichtung zu einer passiven oder aktiven Auslesung mittels eines externen Lesegerätes geeignet.

Bei der elektromagnetischen Sende- und Empfangsvorrichtung handelt es sich insbesondere um eine RFID-Vorrichtung. RFID steht für Radio Frequency Identification und bedeutet Identifizierung mit Hilfe elektromagnetischer Wellen.

Aus dem Stand der Technik sind elektromagnetische Sende- und Empfangsvorrichtungen für Reifen bekannt. Beispielsweise wird in der EP2223814B1 eine elektromagnetische Sende- und Empfangsvorrichtung offenbart. Die elektromagnetische Sende- und Empfangsvorrichtung wird vor einer Anordnung in einem Reifen zwischen zwei Gummilagen angeordnet. Eine weitere Vorrichtung ist aus der EP 1870262 A2 bekannt.

Bei den aus dem Stand der Technik bekannten elektromagnetischen Sende- und Empfangsvorrichtungen, ist der Einsatz von Primärantennen und von Sekundärantennen bekannt. Dabei wird regelmäßig eine Verbindung über eine Lötstelle zwischen der mindestens einen Primärantenne und der mindestens einen Sekundärantenne geschaffen. Über die Lötstelle können Signale zwischen der Primärantenne und der Sekundärantenne ausgetauscht werden.

Durch einen Einsatz einer elektromagnetischen Sende- und Empfangsvorrichtung, beispielsweise in einem Reifen, könnte die elektromagnetische Sende- und Empfangsvorrichtung regelmäßig solchen Kräften ausgesetzt werden, die schädigend auf die einzelnen Bestandteile der elektromagnetischen Sende- und Empfangsvorrichtung einwirken könnten. Dabei könnte es beispielsweise zu einem Brechen der Lötstelle, die die Primärantenne mit der Sekundärantenne verbindet, kommen. Ein Bruch dieser Lötstelle könnte die Auslesung von Informationen aus der mindestens einen Speicherkomponente erschweren.

WO2016193457 A1 zeigt eine Sende- und Empfangsvorrichtung mit einer Primärantenne und einer Sekundärantenne, die miteinander induktiv verbindbar sind.

Durch den Umstand, wonach die mindestens eine Primärantenne und die mindestens eine Sekundärantenne miteinander induktiv verbindbar sind, kann ein Signalaustausch auf Grundlage der elektromagnetischen Induktion genutzt werden. Der elektromagnetischen Induktion liegt die Nutzung elektromagnetischer Felder zu Grunde. Elektromagnetische Felder sind gegenüber mechanischen Belastungen unempfindlich. Die Einsatzfähigkeit der elektromagnetischen Sende- und Empfangsvorrichtung wird also sichergestellt. Schließlich wird eine Anzahl von Komponenten der elektromagnetischen Sende- und Empfangsvorrichtung, die unter einer mechanischen Belastung Schaden nehmen könnten, verringert.

Die mindestens eine Primärantenne und die mindestens eine Sekundärantenne sind derart miteinander verbunden, dass elektromagnetische Wellen, die von der mindestens einen Primärantenne ausgesendet werden, durch die mindestens einen Sekundärantenne empfangen und, beispielsweise nach Änderung einer Frequenz der elektromagnetischen Wellen und/oder einer Modulation der elektromagnetischen Wellen, von der mindestens einen Sekundärantenne ausgesendet werden.

Die mindestens eine Sekundärantenne nimmt die von der mindestens einen Primärantenne ausgesendeten elektromagnetischen Wellen auf, verwandelt diese elektromagnetischen Wellen und sendet diese verwandelten elektromagnetischen Wellen aus.

Die mindestens eine Primärantenne und die mindestens eine Sekundärantenne sind ferner insbesondere derart miteinander verbunden, dass elektromagnetische Wellen, die durch die mindestens einen Sekundärantenne empfangen werden, von der mindestens einen Sekundärantenne verändert werden, beispielsweise durch Änderung der Frequenz oder durch eine Modulation, und dann an die mindestens eine Primärantenne übertragen werden.

Die mindestens eine Primärantenne nimmt die von der mindestens einen Sekundärantenne ausgesendeten elektromagnetischen Wellen auf, verwandelt diese elektromagnetischen Wellen und gibt, der verwandelten elektromagnetischen Welle entsprechende, elektrische Signale an die mindestens eine Speicherkomponente weiter. Einer Induktion liegen veränderliche elektrische Ströme und elektrische Wechselfelder zu Grunde.

Erfindungsgemäß ist die Tragekomponente zumindest teilweise oder vollständig als ein Netz oder ein Gitter ausgebildet. Die mindestens eine Primärantenne ist dabei in die Tragekomponente eingewoben und/oder die mindestens eine Sekundärantenne ist in die Tragekomponente eingewoben. Die Tragekomponente ist insbesondere dann als gewebtes Netz oder gewebtes Gitter ausgebildet, wenn die Tragekomponente aus Filamenten ausgebildet ist, die ein Netz oder die ein Gitter ausbilden.

Die Erfindung betrifft ferner einen Reifen. Der Reifen weist eine Reifeninnenfläche und einen Laufstreifen auf. Der Reifen ist um eine Rotationsachse in eine Umlaufrichtung rotierbar. Der Reifen weist mindestens eine erfindungsgemäße elektromagnetische Sende- und Empfangsvorrichtung auf.

Bei dem Reifen handelt es sich insbesondere um einen Lkw-Reifen, um einen Pkw-Reifen oder um einen Fahrrad-Reifen oder um einen Motorrad-Reifen.

Bei der Reifeninformation handelt es sich insbesondere um eine Information über eine Reifenklasse, über ein Produktionsdatum des Reifens oder über eine andere technische Eigenschaft des Reifens oder um eine eindeutige Nummer zur Identifizierung des Reifens.

Weitere vorteilhafte Ausgestaltungsformen der vorliegenden Erfindung sind Gegenstand der Unteransprüche.

Eine Anzahl an Primärantennen kann zwei betragen und eine Anzahl an Sekundärantennen kann zwei betragen. Dabei können die Primärantennen und die Sekundärantennen an verschiedenen Seiten oder Oberflächen der Tragekomponenten angeordnet sein.

Gemäß einer nächsten vorzugsweisen Ausführungsform der Erfindung ist die Tragekomponente teilweise oder vollständig aus einem Gummimaterial, insbesondere Naturkautschuk, Butylkautschuk, synthetischer Kautschuk, Styrol-Butadien-Kautschuk, Polybutadien-Kautschuk, Nitrilkautschuk, Chloropren-Kautschuk und/oder Ethylen-Propylen-Dien-Kautschuk, und/oder einem Polyamid und/oder einem Elastomer und/oder einem Epoxidharz ausgebildet.

Durch den erfindungsgemäßen Umstand, wonach die Tragekomponente teilweise oder vollständig aus einem Gummimaterial, insbesondere Naturkautschuk, Butylkautschuk, synthetischer Kautschuk, Styrol-Butadien-Kautschuk, Polybutadien-Kautschuk, Nitrilkautschuk, Chloropren-Kautschuk und/oder Ethylen-Propylen-Dien-Kautschuk, und/oder einem Polyamid und/oder einem Elastomer und/oder einem Epoxidharz ausgebildet ist, wird eine Tragekomponente bereitgestellt, die eine ausreichende mechanische Stabilität aufweist.

Gemäß einer vorteilhaften Ausgestaltungsform der Erfindung folgt die Tragekomponente einer Form eines Ovals oder eines Kreises oder eines Dreiecks oder eines Vierecks.

Insbesondere kann die Tragkomponente abgerundete Ecken aufweisen, wobei die Rundungen der Ecken jeweils einem Kreisbogen eines Kreises mit einem Radius der größer als 1 mm ist folgen.

Ferner kann die Tragekomponente Öffnungen aufweisen die durch die Tragekomponente vollständig hindurch reichen. Durch diese Öffnungen kann eine verbesserte Anbindung an eine Gummiumgebung, insbesondere während eines Vulkanisationsvorgangs, erreicht werden. Diese Öffnungen weisen insbesondere einen kreisförmigen Querschnitt mit einem Durchmesser von beispielsweise 1 mm bis 5 mm auf.

Gemäß einer nächsten vorzugsweisen Ausführungsform der Erfindung ist die mindestens eine Primärantenne aus Kupfer, Aluminium, Silber, Eisen, Zink, Zinn, einem elektrisch leitfähigem Kunststoff, beispielsweise Polyacetylene, Poly(p-Phenylen Vinylen), Polyfluoren, Polyphenylen, Polypyren, Polyazulen, Polyamid, Polynaphthalen, Polypyrrol, Polycarbazol, Polyindol, Polythiophen, Poly(3,4-ethylenedioxythiophen), Poly(p-Phenylen Sulfide), und/oder einem elektrisch leitfähigem Elastomer, beispielsweise einem Naturkautschuk oder einem Kautschuk der Kohlenstoffpartikel aufweist oder einem Kautschuk der Ruße aufweist oder einem Kautschuk der Metallpartikel aufweist, ausgebildet.

Alternativ oder zusätzlich ist die mindestens eine Sekundärantenne aus Kupfer, Aluminium, Silber, Eisen, Zink, Zinn, einem elektrisch leitfähigem Kunststoff, beispielsweise Polyacetylene, Poly(p-Phenylen Vinylen), Polyfluoren, Polyphenylen, Polypyren, Polyazulen, Polyamid, Polynaphthalen, Polypyrrol, Polycarbazol, Polyindol, Polythiophen, Poly(3,4-ethylenedioxythiophen), Poly(p-Phenylen Sulfide), und/oder einem elektrisch leitfähigem Elastomer, beispielsweise einem Naturkautschuk oder einem Kautschuk der Kohlenstoffpartikel aufweist oder einem Kautschuk der Ruße aufweist oder einem Kautschuk der Metallpartikel aufweist, ausgebildet.

Gemäß einer nächsten vorzugsweisen Ausführungsform der Erfindung ist die mindestens eine Primärantenne mittels eines Klebemittels stoffschlüssig mit der Tragekomponente verbunden und/oder die mindestens eine Sekundärantenne ist mittels eines Klebemittels stoffschlüssig mit der Tragekomponente verbunden und/oder die mindestens eine Speicherkomponente ist mittels eines Klebemittels stoffschlüssig mit der Tragekomponente verbunden.

Gemäß einer nächsten vorzugsweisen Ausführungsform der Erfindung weist die mindestens eine Primärantenne eine Ummantelung aus Messing auf und/oder die mindestens eine Sekundärantenne weist eine Ummantelung aus Messing auf.

Durch den erfindungsgemäßen Umstand, wonach die mindestens eine Primärantenne eine Ummantelung aus Messing aufweist und/oder die mindestens eine Sekundärantenne eine Ummantelung aus Messing aufweist, wird eine verbesserte Anbindung der mindestens einen Primärantenne und/oder der mindestens einen Sekundärantenne an eine Gummiumgebung erreicht. Bei der Gummiumgebung handelt es sich beispielsweise um den Bereich eines Reifens in den die elektromagnetische Sende- und Empfangsvorrichtung integriert ist.

Gemäß einer nächsten vorzugsweisen Ausführungsform der Erfindung folgt die mindestens eine Primärantenne einer Wellenform oder Mäanderform oder einer Spiralform oder einer Helixform oder einer Federform und/oder die mindestens eine Sekundärantenne folgt einer Wellenform oder Mäanderform oder einer Spiralform oder einer Helixform oder einer Federform.

Durch den erfindungsgemäßen Umstand, wonach die mindestens eine Primärantenne einer Wellenform oder Mäanderform oder einer Spiralform oder einer Helixform oder einer Federform folgt und/oder die mindestens eine Sekundärantenne einer Wellenform oder Mäanderform oder einer Spiralform oder einer Helixform oder einer Federform folgt, wird eine verbesserte mechanische Dehnbarkeit der mindestens einen Primärantenne und der mindestens einen Sekundärantenne sichergestellt. Somit können die mindestens eine Primärantenne und die mindestens eine Sekundärantenne mechanischen Belastungen besser standhalten.

Gemäß einer nächsten vorzugsweisen Ausführungsform der Erfindung weist die elektromagnetische Sende- und Empfangsvorrichtung eine Maximallänge von 20 mm bis 80 mm, eine Maximalbreite von 5 mm bis 25 mm und/oder eine Maximaldicke von 1 mm bis 2 mm auf.

Insbesondere kann ein Betrag der Maximalbreite 50 % des Betrags der Maximallänge betragen und/oder ein Betrag der Maximaldicke kann insbesondere 1% bis 5 % des Betrags der Maximallänge betragen.

Ein Körper, wie die elektromagnetische Sende- und Empfangsvorrichtung, weist grundsätzlich Längen, Breiten und Dicken auf, wobei es sich dabei um räumliche Erstreckungen der elektromagnetischen Sende- und Empfangsvorrichtung handelt, wobei diese Erstreckungen zueinander jeweils in einem rechten Winkel stehen.

Gemäß einer nächsten vorzugsweisen Ausführungsform der Erfindung weist die Tragekomponente Fasern aus Kohlenstoff und/oder Glas auf. Fasern aus Kohlenstoff werden auch als Kohlenstofffasern oder Kohlefasern bezeichnet. Fasern aus Glas werden auch als Glasfasern bezeichnet.

Durch den erfindungsgemäßen Umstand, wonach die die Tragekomponente Fasern aus Kohlenstoff und/oder Glas aufweist, wird der Einsatz der Tragekomponente weiter sichergestellt. Hintergrund dieser Sicherstellung des Einsatzes der Tragekomponente ist der Umstand, dass die Kohlefasern und/oder Glasfasern die Tragekomponente mechanisch weiter stabilisieren.

Gemäß einer nächsten vorzugsweisen Ausführungsform der Erfindung ist die elektromagnetische Sende- und Empfangsvorrichtung mit einem Gummimaterial und/oder mit einem Haftvermittler beschichtet. Bei dem Haftvermittler handelt es sich beispielsweise um ein chloriertes Polymer, insbesondere chloriertes Polyisopren und/oder chloriertes Polybutadien oder chlorierten Naturkautschuk.

Gemäß einer nächsten vorzugsweisen Ausführungsform der Erfindung sind die mindestens eine Speicherkomponente und/oder die mindestens eine Primärantenne auf einem Tragelement angeordnet. Die mindestens eine Speicherkomponente und/oder die mindestens eine Primärantenne sind insbesondere stoffschlüssig mit dem Trageelement verbunden.

Das Trageelement ist mit der Tragekomponente verbunden, insbesondere stoffschlüssig, kraftschlüssig oder formschlüssig, und insbesondere ist das Trageelement auf der Tragekomponente angeordnet.

Gemäß einer nächsten vorzugsweisen Ausführungsform der Erfindung ist das Trageelement teilweise oder vollständig aus einem Gummimaterial, insbesondere Naturkautschuk, Butylkautschuk, synthetischer Kautschuk, Styrol-Butadien-Kautschuk, Polybutadien-Kautschuk, Nitrilkautschuk, Chloropren-Kautschuk und/oder Ethylen-Propylen-Dien-Kautschuk, und/oder einem Polyamid und/oder einem Elastomer und/oder einem Epoxidharz ausgebildet.

Gemäß einer nächsten vorzugsweisen Ausführungsform der Erfindung weist das Trageelement Fasern aus Kohlenstoff und/oder Glas auf.

Gemäß einer nächsten vorzugsweisen Ausführungsform des erfindungsgemäßen Reifens ist mindestens eine elektromagnetische Sende- und Empfangsvorrichtung zwischen einem Innerliner des Reifens und einer Karkasse des Reifens, zwischen einer Karkasse des Reifens und einem Apex des Reifens, zwischen einer Karkasse des Reifens und einem Apex in einem Lagenumschlagsbereich des Reifens, zwischen einem Wulstverstärker des Reifens und einer Karkasse des Reifens, zwischen einer Seitenwand des Reifens und einer Karkasse des Reifens, zwischen einem Rimstrip des Reifens und einer Karkasse des Reifens, innerhalb eines Gummibauteils des Reifens, zwischen einem Gürtel des Reifens und einem Capply des Reifens, zwischen einem Capply des Reifens und einem Profilblock des Reifens und/oder in mindestens einem Profilblock des Reifens angeordnet.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung einer erfindungsgemäßen elektromagnetischen Sende- und Empfangsvorrichtung;
Fig. 2: eine schematische Darstellung einer erfindungsgemäßen elektromagnetischen Sende- und Empfangsvorrichtung gemäß einer Ausführungsform;
Fig. 3: eine schematische Darstellung einer erfindungsgemäßen elektromagnetischen Sende- und Empfangsvorrichtung gemäß einer Ausführungsform;
Fig. 4: eine schematische Darstellung einer erfindungsgemäßen elektromagnetischen Sende- und Empfangsvorrichtung gemäß einer Ausführungsform;
Fig. 5: eine schematische Darstellung einer erfindungsgemäßen elektromagnetischen Sende- und Empfangsvorrichtung gemäß einer Ausführungsform;
Fig. 6: eine schematische Darstellung einer erfindungsgemäßen elektromagnetischen Sende- und Empfangsvorrichtung gemäß einer Ausführungsform;
Fig. 7: eine schematische Darstellung eines erfindungsgemäßen Reifens;
Fig. 8: eine schematische Darstellung einer erfindungsgemäßen elektromagnetischen Sende- und Empfangsvorrichtung gemäß einer Ausführungsform.

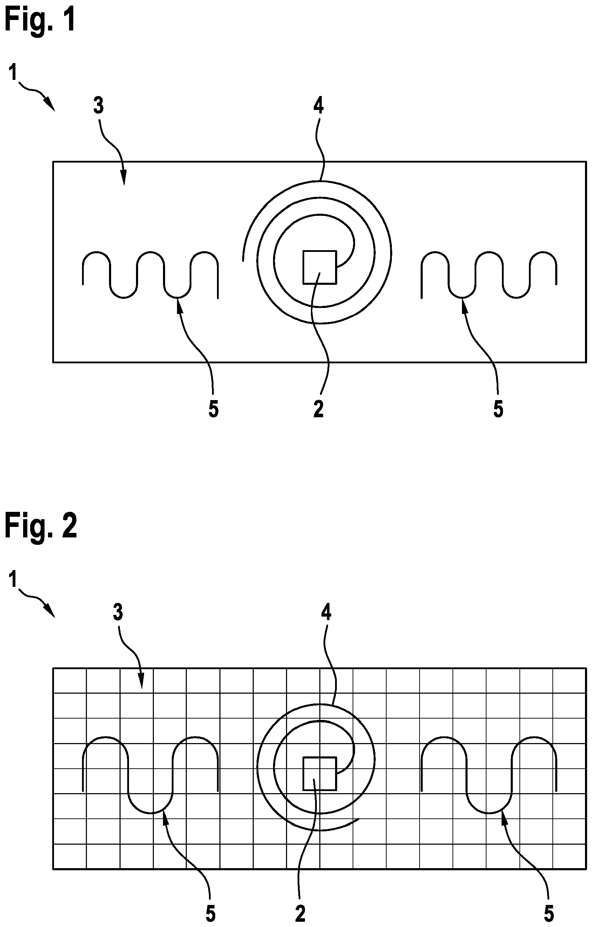

In der Figur 1 ist eine elektromagnetische Sende- und Empfangsvorrichtung 1 für einen Reifen schematisch dargestellt. Die elektromagnetische Sende- und Empfangsvorrichtung 1 weist mindestens eine Speicherkomponente 2 auf. Die mindestens eine Speicherkomponente 2 ist zur Speicherung einer Reifeninformation vorgesehen. Die elektromagnetische Sende- und Empfangsvorrichtung 1 weist eine Tragekomponente 3 auf. Die Tragekomponente 3 ist zum Tragen der mindestens einen Speicherkomponente 2 vorgesehen.

Die elektromagnetische Sende- und Empfangsvorrichtung 1 weist ferner mindestens eine Primärantenne 4 und mindestens eine Sekundärantenne 5 auf.

Die mindestens eine Primärantenne 4 ist zum Senden und zum Empfangen elektromagnetischer Wellen vorgesehen. Die mindestens eine Sekundärantenne 5 ist zum Senden und zum Empfangen elektromagnetischer Wellen vorgesehen.

Die mindestens eine Primärantenne 4 ist mit der mindestens einen Speicherkomponente 2 verbunden und kann zum Versenden von Informationen, die in der mindestens einen Speicherkomponente 2 gespeichert sind verwendet werden.

Ebenso können Informationen, die über elektromagneteiche Wellen transportiert werden, mittels der Primärantenne 4 durch den Empfang der der elektromagnetischen Wellen an die mindestens eine Speicherkomponente 2 übertragen und auf dieser gespeichert werden.

Die mindestens eine Primärantenne 4 und die mindestens eine Sekundärantenne 5 sind miteinander induktiv verbindbar.

Gemäß der Darstellung in der Figur 1 weist die elektromagnetische Sende- und Empfangsvorrichtung 1 zwei Sekundärantennen 5 auf.

In der Figur 2 ist eine erfindungsgemäße elektromagnetische Sende- und Empfangsvorrichtung 1 für einen Reifen schematisch dargestellt. Gemäß der Darstellung in der Figur 2 ist die Tragekomponente 3 als ein Netz ausgebildet. Die mindestens eine Sekundärantenne 5 ist in die Tragekomponente 3 eingewoben.

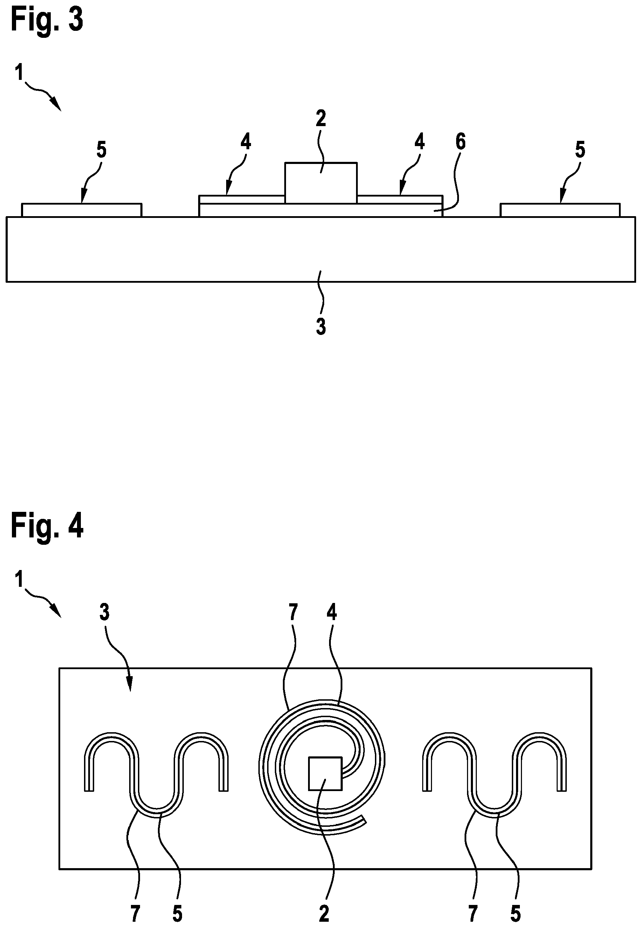

Gemäß der Darstellung in der Figur 2 folgt die mindestens eine Primärantenne 4 einer Spiralform und die mindestens eine Sekundärantenne 5 folgt einer Mäanderform In der Figur 3 ist eine elektromagnetische Sende- und Empfangsvorrichtung 1 für einen Reifen gemäß einer Ausführungsform schematisch dargestellt. Gemäß der Darstellung in der Figur 3 sind die mindestens eine Primärantenne 4 und die mindestens eine Speicherkomponente 2 mittels eines Klebemittels 6 stoffschlüssig mit der Tragekomponente 3 verbunden.

In der Figur 4 ist eine elektromagnetische Sende- und Empfangsvorrichtung 1 für einen Reifen gemäß einer Ausführungsform schematisch dargestellt. Gemäß der Darstellung in der Figur 4 weisen die mindestens eine Primärantenne 4 und die mindestens eine Sekundärantenne 5 eine Ummantelung 7 aus Messing auf.

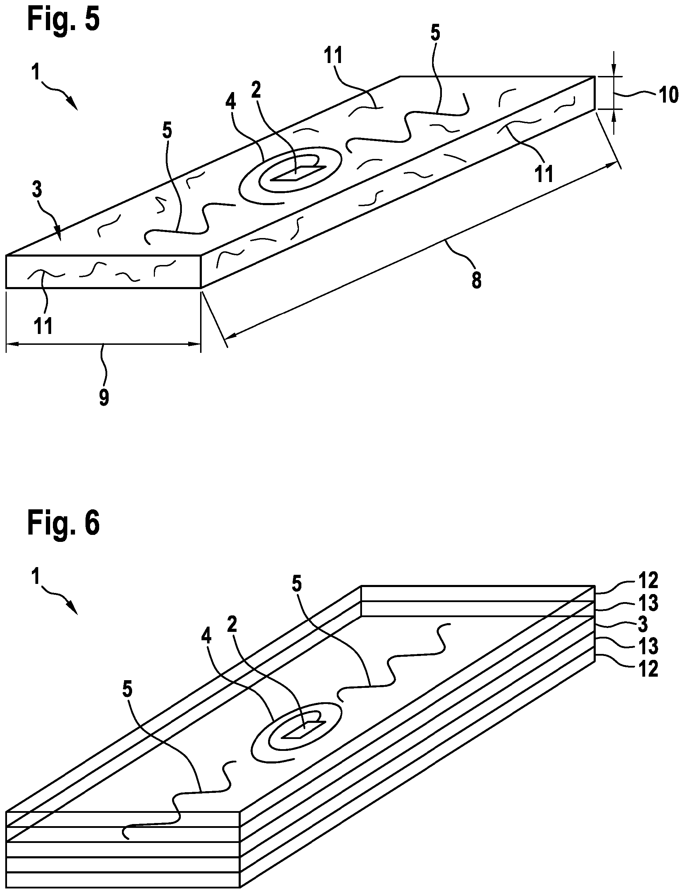

In der Figur 5 ist eine elektromagnetische Sende- und Empfangsvorrichtung 1 für einen Reifen gemäß einer Ausführungsform schematisch dargestellt. Gemäß der Darstellung in der Figur 5 weist die elektromagnetische Sende- und Empfangsvorrichtung 1 eine Maximallänge 8 von 20 mm bis 80 mm, eine Maximalbreite 9 von 5 mm bis 25 mm und eine Maximaldicke 10 von 1 mm bis 2 mm auf.

Insbesondere weist die die Tragekomponente 3 Fasern 11 aus Kohlefaser und/oder Glasfaser auf.

In der Figur 6 ist eine elektromagnetische Sende- und Empfangsvorrichtung 1 für einen Reifen gemäß einer Ausführungsform schematisch dargestellt. Gemäß der Darstellung in der Figur 6 ist die elektromagnetische Sende- und Empfangsvorrichtung 1 mit einem Gummimaterial 12 und mit einem Haftvermittler 13, beispielsweise chloriertes Polymer, insbesondere chloriertes Polyisopren und/oder chloriertes Polybutadien oder chlorierter Naturkautschuk, beschichtet. Der Haftvermittler 13 liegt zwischen dem Gummimaterial 12 und der Tragekomponente 3.

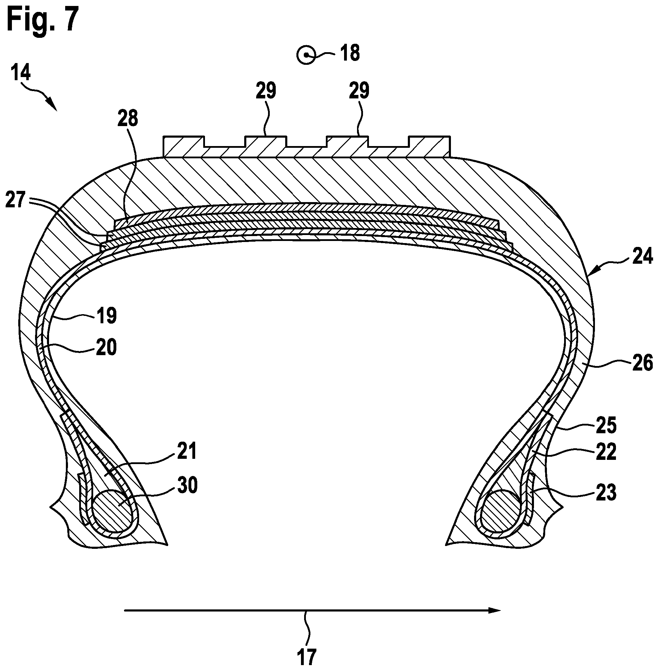

In der Figur 7 ist erfindungsgemäßer Reifen 14 in Radialschnittansicht schematisch dargestellt. Der Reifen 14 weist eine Reifeninnenfläche 15 und einen Laufstreifen 16 auf und ist um eine Rotationsachse 17 in eine Umlaufrichtung 18 rotierbar. Der Reifen 14 weist mindestens eine erfindungsgemäße elektromagnetische Sende- und Empfangsvorrichtung 1 auf.

Insbesondere kann eine erfindungsgemäße elektromagnetische Sende- und Empfangsvorrichtung 1 zwischen einem Innerliner 19 des Reifens 14 und einer Karkasse 20 des Reifens 14, zwischen einer Karkasse 20 des Reifens 14 und einem Apex 21 des Reifens 14, zwischen einer Karkasse 20 des Reifens 14 und einem Apex 21 in einem Lagenumschlagsbereich 22 des Reifens 14, zwischen einem Wulstverstärker 23 des Reifens 14 und einer Karkasse 20 des Reifens 14, zwischen einer Seitenwand 24 des Reifens 14 und einer Karkasse 20 des Reifens 14, zwischen einem Rimstrip 25 des Reifens 14 und einer Karkasse 20 des Reifens 14, innerhalb eines Gummibauteils 26 des Reifens 14, zwischen einem Gürtel 27 des Reifens 14 und einem Capply 28 des Reifens 14, zwischen einem Capply 28 des Reifens 14 und einem Profilblock 29 des Reifens 14 und/oder in mindestens einem Profilblock 29 des Reifens 14 angeordnet sein. Ein Wulstkern des Reifens 14 wird mit 30 bezeichnet.

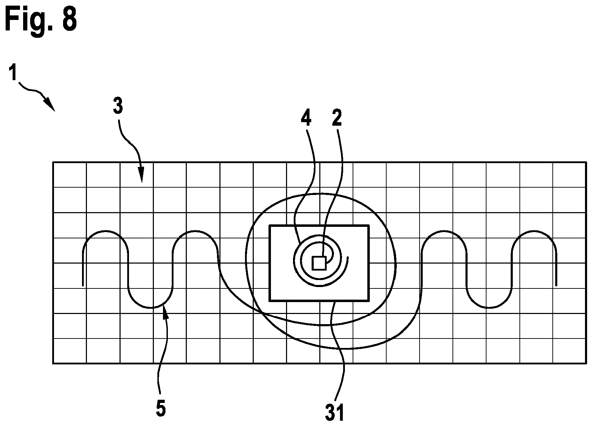

In der Figur 8 ist eine elektromagnetische Sende- und Empfangsvorrichtung 1 für einen Reifen gemäß einer Ausführungsform schematisch dargestellt. Gemäß der Darstellung in der Figur 8 sind die mindestens eine Speicherkomponente 2 und die mindestens eine Primärantenne 4 auf einem Tragelement 31 angeordnet.

Die mindestens eine Speicherkomponente 2 und/oder die mindestens eine Primärantenne 4 sind insbesondere stoffschlüssig mit dem Trageelement 31 verbunden.

Das Trageelement 31 mit der Tragekomponente 3 verbunden und auf dieser angeordnet.

### Bezugszeichenliste (ist Teil der Beschreibung)

- 1: Elektromagnetische Sende- und Empfangsvorrichtung
- 2: Speicherkomponente
- 3: Tragekomponente
- 4: Primärantenne
- 5: Sekundärantenne
- 6: Klebemittel
- 7: Ummantelung
- 8: Maximallänge
- 9: Maximalbreite
- 10: Maximaldicke
- 11: Fasern
- 12: Gummischicht
- 13: Haftvermittler
- 14: Reifen
- 15: Reifeninnenfläche
- 16: Laufstreifen
- 17: Rotationsachse
- 18: Umlaufrichtung
- 19: Innerliner
- 20: Karkasse
- 21: Apex
- 22: Lagenumschlagsbereich
- 23: Wulstverstärker
- 24: Seitendwand
- 25: Rimstrip
- 26: Beliebiges Gummibauteil
- 27: Gürtel
- 28: Capply
- 29: Profilblock
- 30: Wulstkern
- 31: Trageelement

## Patentansprüche

1. Elektromagnetische Sende- und Empfangsvorrichtung (1) für einen Reifen (14), aufweisend mindestens eine Speicherkomponente (2), wobei die mindestens eine Speicherkomponente (2) zur Speicherung einer Reifeninformation vorgesehen ist, aufweisend eine Tragekomponente (3), wobei die Tragekomponente (3) zum Tragen der mindestens einen Speicherkomponente (2) vorgesehen ist, wobei die elektromagnetische Sende- und Empfangsvorrichtung (1) mindestens eine Primärantenne (4) und mindestens eine Sekundärantenne (5) aufweist, wobei die mindestens eine Primärantenne (4) zum Senden und zum Empfangen elektromagnetischer Wellen vorgesehen ist und die mindestens eine Sekundärantenne (5) zum Senden und zum Empfangen elektromagnetischer Wellen vorgesehen ist, **wobei** die mindestens eine Primärantenne (4) und die mindestens eine Sekundärantenne (5) miteinander induktiv verbindbar sind, **dadurch gekennzeichnet, dass** die Tragekomponente (3) zumindest teilweise oder vollständig als ein Netz oder ein Gitter ausgebildet ist, wobei die mindestens eine Primärantenne (4) in die Tragekomponente (3) eingewoben ist und/oder die mindestens eine Sekundärantenne (5) in die Tragekomponente (3) eingewoben ist.

2. Elektromagnetische Sende- und Empfangsvorrichtung (1) nach Anspruch 1, **dadurch gekennzeichnet, dass** die Tragekomponente (3) teilweise oder vollständig aus einem Gummimaterial, insbesondere Naturkautschuk, Butylkautschuk, synthetischer Kautschuk, Styrol-Butadien-Kautschuk, Polybutadien-Kautschuk, Nitrilkautschuk, Chloropren-Kautschuk und/oder Ethylen-Propylen-Dien-Kautschuk, und/oder einem Polyamid und/oder einem Elastomer und/oder einem Epoxidharz ausgebildet ist.

3. Elektromagnetische Sende- und Empfangsvorrichtung (1) nach einem der vorhergehenden Ansprüche, **dadurch gekennzeichnet, dass** die mindestens eine Primärantenne (4) aus Kupfer, Aluminium, Silber, Eisen, Zink, Zinn, einem elektrisch leitfähigem Kunststoff, beispielsweise Polyacetylene, Poly(p-Phenylen Vinylen), Polyfluoren, Polyphenylen, Polypyren, Polyazulen, Polyamid, Polynaphthalen, Polypyrrol, Polycarbazol, Polyindol, Polythiophen, Poly(3,4-ethylenedioxythiophen), Poly(p-Phenylen Sulfide), und/oder einem elektrisch leitfähigem Elastomer, beispielsweise einem Naturkautschuk oder einem Kautschuk der Kohlenstoffpartikel aufweist oder einem Kautschuk der Ruße aufweist oder einem Kautschuk der Metallpartikel aufweist, ausgebildet ist und/oder die mindestens eine Sekundärantenne (5) aus Kupfer, Aluminium, Silber, Eisen, Zink, Zinn, einem elektrisch leitfähigem Kunststoff, beispielsweise Polyacetylene, Poly(p-Phenylen Vinylen), Polyfluoren, Polyphenylen, Polypyren, Polyazulen, Polyamid, Polynaphthalen, Polypyrrol, Polycarbazol, Polyindol, Polythiophen, Poly(3,4-ethylenedioxythiophen), Poly(p-Phenylen Sulfide), und/oder einem elektrisch leitfähigem Elastomer, beispielsweise einem Naturkautschuk oder einem Kautschuk der Kohlenstoffpartikel aufweist oder einem Kautschuk der Ruße aufweist oder einem Kautschuk der Metallpartikel aufweist, ausgebildet ist.

4. Elektromagnetische Sende- und Empfangsvorrichtung (1) nach einem der vorhergehenden Ansprüche, **dadurch gekennzeichnet, dass** die mindestens eine Primärantenne (4) mittels eines Klebemittels (6) stoffschlüssig mit der Tragekomponente (3) verbunden ist und/oder die mindestens eine Sekundärantenne (5) mittels eines Klebemittels (6) stoffschlüssig mit der Tragekomponente (3) verbunden ist und/oder die mindestens eine Speicherkomponente (2) mittels eines Klebemittels (6) stoffschlüssig mit der Tragekomponente (3) verbunden ist.

5. Elektromagnetische Sende- und Empfangsvorrichtung (1) nach einem der vorhergehenden Ansprüche, **dadurch gekennzeichnet, dass** die mindestens eine Primärantenne (4) eine Ummantelung (7) aus Messing aufweist und/oder die mindestens eine Sekundärantenne (5) eine Ummantelung (7) aus Messing aufweist.

6. Elektromagnetische Sende- und Empfangsvorrichtung (1) nach einem der vorhergehenden Ansprüche, **dadurch gekennzeichnet, dass** die mindestens eine Primärantenne (4) einer Wellenform oder einer Mäanderform oder einer Spiralform oder einer Helixform oder einer Federform folgt und/oder die mindestens eine Sekundärantenne (5) einer Wellenform oder einer Mäanderform oder einer Spiralform oder einer Helixform oder einer Federform folgt.

7. Elektromagnetische Sende- und Empfangsvorrichtung (1) nach einem der vorhergehenden Ansprüche, **dadurch gekennzeichnet, dass** die elektromagnetische Sende- und Empfangsvorrichtung (1) eine Maximallänge (8) von 20 mm bis 80 mm, eine Maximalbreite (9) von 5 mm bis 25 mm und/oder eine Maximaldicke (10) von 1 mm bis 2 mm aufweist.

8. Elektromagnetische Sende- und Empfangsvorrichtung (1) nach einem der vorhergehenden Ansprüche, **dadurch gekennzeichnet, dass** die Tragekomponente (3) Fasern (11) aus Kohlenstoff und/oder Glas aufweist.

9. Elektromagnetische Sende- und Empfangsvorrichtung (1) nach einem der vorhergehenden Ansprüche, **dadurch gekennzeichnet, dass** die elektromagnetische Sende- und Empfangsvorrichtung (1) mit einem Gummimaterial (12) und/oder mit einem Haftvermittler (13), beispielsweise chloriertes Polymer, insbesondere chloriertes Polyisopren und/oder chloriertes Polybutadien oder chlorierter Naturkautschuk, beschichtet ist.

10. Elektromagnetische Sende- und Empfangsvorrichtung (1) nach einem der vorhergehenden Ansprüche, **dadurch gekennzeichnet, dass** die mindestens eine Speicherkomponente (2) und/oder die mindestens eine Primärantenne (4) auf einem Tragelement (31) angeordnet sind, wobei die mindestens eine Speicherkomponente (2) und/oder die mindestens eine Primärantenne (4) insbesondere stoffschlüssig mit dem Trageelement (31) verbunden sind, und das Trageelement (31) mit der Tragekomponente (3) verbunden ist.

11. Reifen (14), aufweisend eine Reifeninnenfläche (15) und einen Laufstreifen (16), wobei der Reifen (14) um eine Rotationsachse (17) in eine Umlaufrichtung (18) rotierbar ist, **dadurch gekennzeichnet, dass** der Reifen (14) mindestens eine elektromagnetische Sende- und Empfangsvorrichtung (1) nach einem der vorgehenden Ansprüche aufweist.

## Claims

1. Electromagnetic transmitting and receiving device (1) for a tyre (14), having at least one memory component (2), wherein the at least one memory component (2) is intended for storing tyre information, having a carrying component (3), wherein the carrying component (3) is intended for carrying the at least one memory component (2), wherein the electromagnetic transmitting and receiving device (1) has at least one primary antenna (4) and at least one secondary antenna (5), wherein the at least one primary antenna (4) is intended for sending and receiving electromagnetic waves and the at least one secondary antenna (5) is intended for transmitting and receiving electromagnetic waves, wherein the at least one primary antenna (4) and the at least one secondary antenna (5) can be inductively connected to one another, **characterized in that** the carrying component (3) is at least partially or completely formed as a mesh or a grid, wherein the at least one primary antenna (4) is woven into the carrying component (3) and/or the at least one secondary antenna (5) is woven into the carrying component (3).

2. Electromagnetic transmitting and receiving device (1) according to Claim 1, **characterized in that** the carrying component (3) is partially or completely formed from a rubber material, in particular natural rubber, butyl rubber, synthetic rubber, styrene-butadiene rubber, polybutadiene rubber, nitrile rubber, chloroprene rubber and/or ethylene-propylene-diene rubber, and/or a polyamide and/or an elastomer and/or an epoxy resin.

3. Electromagnetic transmitting and receiving device (1) according to one of the preceding claims, **characterized in that** the at least one primary antenna (4) is formed from copper, aluminium, silver, iron, zinc, tin, an electrically conductive plastic, for example polyacetylene, poly(p-phenylene vinylene), polyfluorene, polyphenylene, polypyrene, polyazulene, polyamide, polynaphthalene, polypyrrole, polycarbazole, polyindole, polythiophene, poly(3,4-ethylenedioxythiophene), poly(p-phenylene sulfide), and/or an electrically conductive elastomer, for example a natural rubber or a rubber that comprises carbon particles or a rubber that comprises carbon black or a rubber that comprises metal particles, and/or the at least one secondary antenna (5) is formed from copper, aluminium, silver, iron, zinc, tin, an electrically conductive plastic, for example polyacetylene, poly(p-phenylene vinylene), polyfluorene, polyphenylene, polypyrene, polyazulene, polyamide, polynaphthalene, polypyrrole, polycarbazole, polyindole, polythiophene, poly(3,4-ethylenedioxythiophene), poly(p-phenylene sulfide), and/or an electrically conductive elastomer, for example a natural rubber or a rubber that comprises carbon particles or a rubber that comprises carbon black or a rubber that comprises metal particles.

4. Electromagnetic transmitting and receiving device (1) according to one of the preceding claims, **characterized in that** the at least one primary antenna (4) is connected to the carrying component (3) in a material-bonding manner by means of an adhesive (6) and/or the at least one secondary antenna (5) is connected to the carrying component (3) in a material-bonding manner by means of an adhesive (6) and/or the at least one memory component (2) is connected to the carrying component (3) in a material-bonding manner by means of an adhesive (6).

5. Electromagnetic transmitting and receiving device (1) according to one of the preceding claims, **characterized in that** the at least one primary antenna (4) has a casing (7) of brass and/or the at least one secondary antenna (5) has a casing (7) of brass.

6. Electromagnetic transmitting and receiving device (1) according to one of the preceding claims, **characterized in that** the at least one primary antenna (4) follows the form of a wave or the form of a meander or the form of a spiral or the form of a helix or the form of a spring and/or the at least one secondary antenna (5) follows the form of a wave or the form of a meander or the form of a spiral or the form of a helix or the form of a spring.

7. Electromagnetic transmitting and receiving device (1) according to one of the preceding claims, **characterized in that** the electromagnetic transmitting and receiving device (1) has a maximum length (8) of 20 mm to 80 mm, a maximum width (9) of 5 mm to 25 mm and/or a maximum thickness (10) of 1 mm to 2 mm.

8. Electromagnetic transmitting and receiving device (1) according to one of the preceding claims, **characterized in that** the carrying component (3) comprises fibres (11) of carbon and/or glass.

9. Electromagnetic transmitting and receiving device (1) according to one of the preceding claims, **characterized in that** the electromagnetic transmitting and receiving device (1) is coated with a rubber material (12) and/or with an adhesion promoter (13), for example chlorinated polymer, in particular chlorinated polyisoprene and/or chlorinated polybutadiene or chlorinated natural rubber.

10. Electromagnetic transmitting and receiving device (1) according to one of the preceding claims, **characterized in that** the at least one memory component (2) and/or the at least one primary antenna (4) are arranged on a carrying element (31), wherein the at least one memory component (2) and/or the at least one primary antenna (4) are connected to the carrying element (31), in particular in a material-bonding manner, and the carrying element (31) is connected to the carrying component (3).

11. Tyre (14), having a tyre inner surface (15) and a tread (16), wherein the tyre (14) is rotatable in a rotating direction (18) about an axis of rotation (17), **characterized in that** the tyre (14) has at least one electromagnetic transmitting and receiving device (1) according to one of the preceding claims.

## Revendications

1. Dispositif d'émission et de réception électromagnétique (1) destiné à un pneumatique (14), ledit dispositif comportant
au moins un composant de mémorisation (2), l'au moins un composant de mémorisation (2) étant prévu pour mémoriser une information de pneumatique,
un composant porteur (3), le composant porteur (3) étant prévu pour porter l'au moins un composant de mémorisation (2), le dispositif d'émission et de réception électromagnétique (1) comportant au moins une antenne primaire (4) et au moins une antenne secondaire (5), l'au moins une antenne primaire (4) étant prévue pour transmettre et recevoir des ondes électromagnétiques et l'au moins une antenne secondaire (5) étant prévue pour transmettre et recevoir des ondes électromagnétiques, l'au moins une antenne primaire (4) et l'au moins une antenne secondaire (5) pouvant être reliées l'une à l'autre par induction, **caractérisé en ce que** le composant porteur (3) est totalement ou au moins partiellement conçu comme un filet ou une grille, l'au moins une antenne primaire (4) étant incorporée par tissage dans le composant porteur (3) et/ou l'au moins une antenne secondaire (5) étant incorporée par tissage dans le composant porteur (3).

2. Dispositif d'émission et de réception électromagnétique (1) selon la revendication 1, **caractérisé en ce que** le composant porteur (3) est totalement ou partiellement en matériau caoutchouteux, notamment en caoutchouc naturel, en caoutchouc butyle, en caoutchouc synthétique, en caoutchouc styrène-butadiène, en caoutchouc polybutadiène, en caoutchouc nitrile, en caoutchouc chloroprène et/ou en caoutchouc éthylène-propylène-diène, et/ou en polyamide et/ou en élastomère et/ou en résine époxy.

3. Dispositif d'émission et de réception électromagnétique (1) selon l'une des revendications précédentes, **caractérisé en ce que** l'au moins une antenne primaire (4) est en cuivre, en aluminium, en argent, en fer, en zinc, en étain, en matière synthétique électriquement conductrice, par exemple en polyacétylène, en poly(p-phénylène vinylène), en polyfluorène, en polyphénylène, en polypyrène, en polyazulène, en polyamide, en polynaphtalène, en polypyrrole, en polycarbazole, en polyindole, en polythiophène, en poly(3,4-éthylènedioxythiophène), en poly(p-phénylène sulfure), et/ou en élastomère électriquement conducteur, par exemple en caoutchouc naturel ou en caoutchouc contenant des particules de carbone ou en caoutchouc contenant du noir de carbone ou en caoutchouc contenant des particules métalliques et/ou l'au moins une antenne secondaire (5) est en cuivre, en aluminium, en argent, en fer, en zinc, en étain, en matière synthétique électriquement conductrice, par exemple en polyacétylène, en poly(p-phénylène vinylène), en polyfluorène, en polyphénylène, en polypyrène, en polyazulène, en polyamide, en polynaphtalène, en polypyrrole, en polycarbazole, en polyindole, en polythiophène, en poly(3,4-éthylènedioxythiophène), en poly(p-phénylène sulfure), et/ou en élastomère électriquement conducteur, par exemple en caoutchouc naturel ou en caoutchouc contenant des particules de carbone ou en caoutchouc contenant du noir de carbone ou en caoutchouc contenant des particules métalliques.

4. Dispositif d'émission et de réception électromagnétique (1) selon l'une des revendications précédentes, **caractérisé en ce que** l'au moins une antenne primaire (4) est reliée par une liaison de matière au composant porteur (3) au moyen d'un adhésif (6) et/ou l'au moins une antenne secondaire (5) est reliée par une liaison de matière au composant porteur (3) au moyen d'un adhésif (6) et/ou l'au moins un composant de mémorisation (2) est relié par une liaison de matière au composant porteur (3) au moyen d'un adhésif (6).

5. Dispositif d'émission et de réception électromagnétique (1) selon l'une des revendications précédentes, **caractérisé en ce que** l'au moins une antenne primaire (4) comporte une enveloppe (7) en laiton et/ou l'au moins une antenne secondaire (5) comporte une enveloppe (7) en laiton.

6. Dispositif d'émission et de réception électromagnétique (1) selon l'une des revendications précédentes, **caractérisé en ce que** l'au moins une antenne primaire (4) suit une forme d'onde ou une forme de méandre ou une forme de spirale ou une forme d'hélice ou une forme de ressort et/ou l'au moins une antenne secondaire (5) suit une forme d'onde ou une forme de méandre ou une forme de spirale ou une forme d'hélice ou une forme de ressort.

7. Dispositif d'émission et de réception électromagnétique (1) selon l'une des revendications précédentes, **caractérisé en ce que** le dispositif d'émission et de réception électromagnétique (1) a une longueur maximale (8) de 20 mm à 80 mm, une largeur maximale (9) de 5 mm à 25 mm et/ou une épaisseur maximale (10) de 1 mm à 2 mm.

8. Dispositif d'émission et de réception électromagnétique (1) selon l'une des revendications précédentes, **caractérisé en ce que** le composant porteur (3) comporte des fibres (11) en carbone et/ou en verre.

9. Dispositif d'émission et de réception électromagnétique (1) selon l'une des revendications précédentes, **caractérisé en ce que** le dispositif d'émission et de réception électromagnétique (1) est revêtu d'un matériau caoutchouteux (12) et/ou d'un promoteur d'adhérence (13), par exemple un polymère chloré, notamment du polyisoprène chloré et/ou du polybutadiène chloré ou du caoutchouc naturel chloré.

10. Dispositif d'émission et de réception électromagnétique (1) selon l'une des revendications précédentes, **caractérisé en ce que** l'au moins un composant de mémorisation (2) et/ou l'au moins une antenne primaire (4) sont disposés sur un élément porteur (31), l'au moins un composant de mémorisation (2) et/ou l'au moins une antenne primaire (4) étant reliés notamment par une liaison de matière à l'élément porteur (31) et l'élément porteur (31) étant relié au composant porteur (3).

11. Pneumatique (14), comportant une surface de pneumatique intérieure (15) et une bande de roulement (16), le pneumatique (14) pouvant tourner sur un axe de rotation (17) dans un sens de rotation (18), **caractérisé en ce que** le pneumatique (14) comporte au moins un dispositif d'émission et de réception électromagnétique (1) selon l'une des revendications précédentes.
